(19) Europäisches Patentamt
European Patent Office
Office européen des brevets

(11) **EP 2 950 271 A2**

(12) **EUROPEAN PATENT APPLICATION**

(43) Date of publication:
**02.12.2015 Bulletin 2015/49**

(51) Int Cl.:
***G06T 7/00*** *(2006.01)*     ***G01B 11/25*** *(2006.01)*

(21) Application number: **15001558.4**

(22) Date of filing: **22.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.05.2014 SI 201400202**

(71) Applicants:
• **Alpineon d.o.o.**
**1000 Ljubljana (SI)**
• **Univerza v Ljubljani**
**1000 Ljubljana (SI)**

(72) Inventors:
• **Zganec, Mario**
**4202 Golnik (SI)**
• **Zganec Gros, Jerneja**
**4202 Golnik (SI)**
• **Krizaj, Janez**
**4000 Kranj (SI)**
• **Struc, Vitomir**
**1000 Ljubljana (SI)**

(74) Representative: **Ros, Zlata**
**Patentna pisarna d.o.o.**
**Copova 14**
**P.O. Box 1725**
**1001 Ljubljana (SI)**

(54) **METHOD AND DEVICE FOR DEPTH IMAGING**

(57) A projector (P) transilluminates dots (Di) of a matrix (M) in direction towards a scene (Sc) there forming scene dots. In a camera sensor (S) a displacement ($\Delta i$) nf an image ($Ii^Z$) of an ith scene dot originating from projecting the dot (Di) and having a distance of (Z) from the projector is measured from a location, which is anticipated to be a location of an image ($Ii^{Z-}$) of an ith dot in a plane at a lowest distance of (Z-), which ith dot would originate from said dot (Di), and said distance of (Z) in the paraxial approximation is $Z = (1/Z- - \Delta i/fC.d)^{-1}$, whereat fC is a camera focal length. The distance of (Z) from a proposed device (DID) for any scene point is simply calculated on the basis of said displacement ($\Delta i$) and straightforward interpolations.

Fig. 1

EP 2 950 271 A2

## Description

The invention relates to a method and a device for depth imaging, which are based on projecting a matrix of dots on a scene.

There has been known a depth imaging of a scene by processing an image of the scene illuminated with structured infrared light beams (WO 2007/043036 A1, US 8,150,142 B2). Repeating subpatterns make up a pattern and determine a distribution of luminous flux density across a cross-sectional plane of the projected light beam. Subpattern dots are arranged with respect to each other in an uncorrelated way. The depth across the scene is computed according to a triangulation method taking into account a mutual arrangement of single dots in the pattern as well as dots of the scene corresponding to said pattern dots, yet pairs of dots corresponding to each other are first determined by a computationally demanding cross-correlation between the pattern image and the scene image. Hereby a speed of establishing the scene depth image having a required degree of resolution is reduced.

Patent US 6,751,344 B1 discloses a depth imaging of said kind using a pattern formed by a uniform rectangular grid and a reference object in the middle of said grid. A location of a dot within the grid is determined relatively to the reference object whereby determining a mutual correspondence of dots is accelerated. However, a depth determination is not robust precisely due to said reference object and errors may occur.

The technical problem of the invention is to propose such method and such device for depth imaging a scene that determination of a depth for any point of the scene will be straightforward and a reference point in said determination for any scene point will be unambiguously definable without any need to solve a problem of correspondence between parts of a projected pattern and parts of an image of said pattern.

The technical problem is solved by the method of the invention for depth imaging as characterized by the features of the characterizing portion of the first claim, and by the device of the invention for carrying out said method as characterized by the features of the characterizing portion of the fifth claim. Dependent claims characterize the variants of their embodiments.

The method and device of the invention for depth imaging advantageously make it possible that a depth of any scene point is calculated on the basis of a distance of an image of said scene point from a location in a camera sensor, which is anticipated just for an image of this point at a known scene depth.

The invention will now be explained in more detail by way of the description of embodiments of the method as well as a device of the invention intended for depth imaging and with reference to the accompanying drawing representing in

Fig. 1 a schematic presentation of a device of the invention for depth imaging and its functioning,

Fig. 2 a matrix to be projected in the device of the invention,

Fig. 3 two projected light beams and light beam as reflected by an actual scene as well as by scenes at a lower and upper limiting distances as preset for the device of the invention, and

Fig. 4 the matrix to be projected and a camera sensor with images of three scene dots at the lower and upper limiting distances as well as the actual distance.

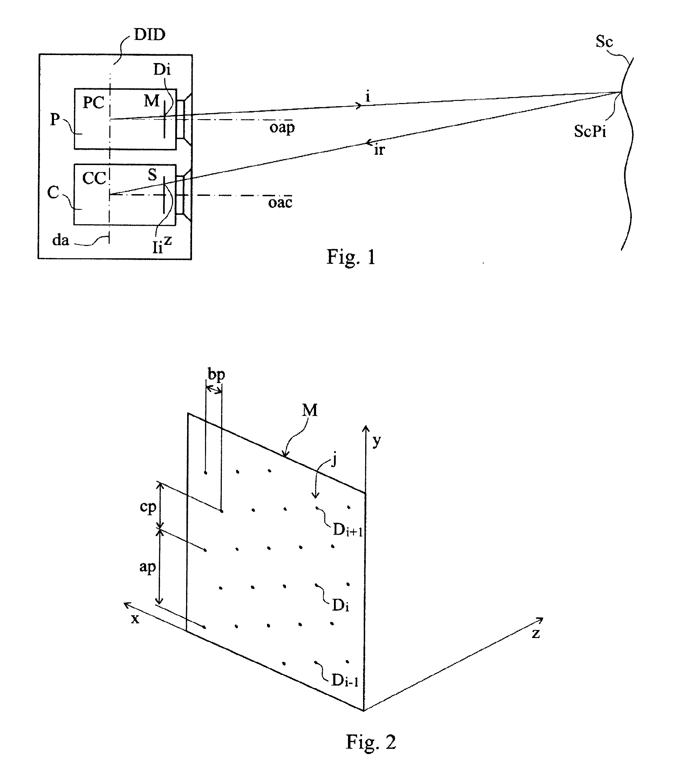

A disclosed method for depth imaging applies projecting a matrix of dots on a scene Sc in a known way. For said projecting on the scene Sc a laser, whose light is spread by a diffraction element in several light beams, or a projector P (Fig. 1) may be used.

For carrying out the method of the invention, components of a device DID of the invention for depth imaging are arranged and oriented in the following way.

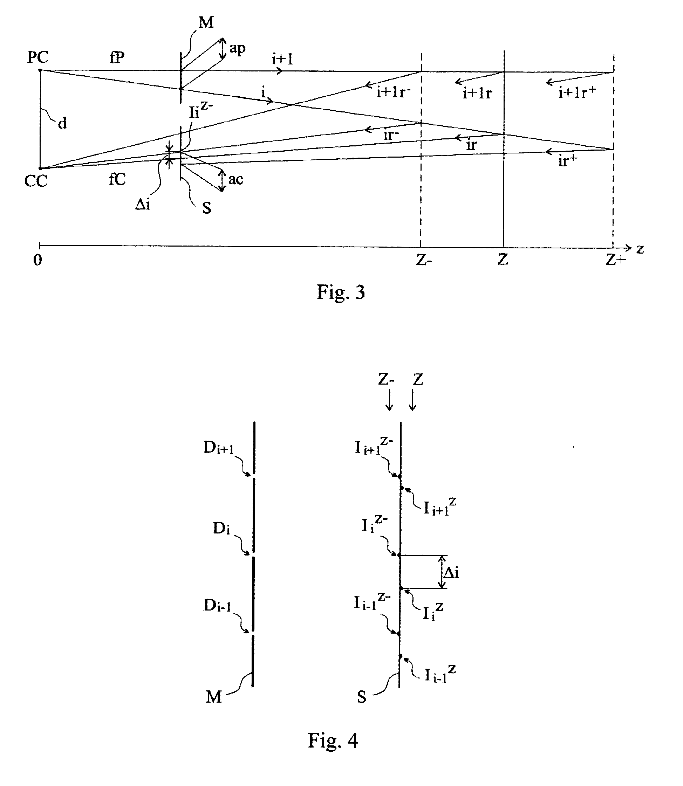

The projector P transilluminates a matrix M of the dots D1, D2, ... in a direction of a coordinate axis z, *i.e.* towards the scene Sc. The matrix M, e.g. the mask having pinhole at the dot Di (Figs. 2 and 4), allows a light beam i to pass through the pinhole at the dot Di. Said light beam i forms an illuminated ith scene dot at a point ScPi on the scene Sc.

In a sensor S of a camera C an image of the scene as illuminated by the projector P is formed. A light beam ir reflected by the scene point ScPi towards the camera C forms an image $Ii^z$ of said illuminated scene point ScPi. A depth of said scene point ScPi or in other words a value Z of its distance from the camera optical center CC is to be determined.

In the matrix M the dots Di are distant from each other by a first distance of ap arranged in columns j, which are oriented along a coordinate axis y.

A lower limit of the value ap of said first distance is determined as fP (d/Z- - d/Z+) in terms of a preset lower limiting distance of Z- of the scene Sc from the camera optical center CC or a projector optical center PC and a preset upper limiting distance of Z+ of the scene Sc from the camera optical center CC or the projector optical center PC, whereat the optical centers CP, CC of the projector P and the camera C, respectively, are distant from each other by a fourth distance of d; fP is a projector focal length.

The columns j are distant from each other by a second distance of bp in a direction of a coordinate axis x.

The matrix M is distant from the projector optical center PC being located on the coordinate axis y by the projector focal length of fP; the camera optical center CC is located on the coordinate axis y too.

Both an optical axis oac of the camera C and an optical axis oap of the projector P are aligned along the coordinate axis z.

The device DID of the invention for depth imaging is foreseen for imaging scenes Sc between the lower limiting distance of Z- and the upper limiting distance of Z+ (Fig. 3). The distance of Z of the point ScPi on the scene Sc from the camera optical center CC or the projector optical center PC or in other words the depth of the scene Sc at said point is to be determined.

The projected light beam i illuminates the point ScPi on the scene Sc; by the scene Sc at said point ScPi being distant from the camera center CC by a distance of Z- or Z or Z+ light beams ir- or ir or ir+, respectively, are reflected, and in the camera sensor S images $Ii^{Z-}$ or $Ii^{Z}$ or $Ii^{Z-}$, respectively, are formed. The same is true for a projected light beam i+1: reflected light beams i+1r- or i+1r or i+1r+ form images $Ii+1^{Z-}$ or $Ii+1^{Z}$ or $Ii+1^{Z-}$, respectively, in the camera sensor S.

According to the invention, first a displacement $\Delta i$ of the image $Ii^{Z}$ of the ith scene dot at the scene point ScPi - at the selected arrangement of the projector P and the camera C said displacement $\Delta i$ always and exclusively takes place only along the coordinate axis y - is measured from a known location, at which an image $Ii^{Z-}$ of an ith dot in a plane at the lower limiting distance of Z- from the camera optical center CC or the projector optical center PC would be formed, which ith dot in said plane would originate from said matrix dot Di; hereafter said distance of Z - the depth of the ith scene dot - is calculated.

Said value Z of the depth of the ith scene dot at the scene point ScPoi is calculated in the paraxial approximation as

$$Z = (1/Z- - \Delta i/fC.d)^{-1}. \qquad (1)$$

The sensor S is distant from the camera optical center CC by a camera focal length of fC.

The above expression is derived from triangles in Fig. 3 when taking into account that the represented light beams are paraxial light beams only.

The distance of Z of any scene point from the x-y plane is calculated by means of interpolation with respect to the distances of Z of the closest illuminated scene dots, which distances have been calculated according to said paraxial approximation (1).

The matrix M is simply structured; nevertheless, the distance of Z of unlit scene points can be suitably determined too or, more precisely, the unlit parts of the scene Sc can also be suitably reconstructed by means of the method of the invention if the scene Sc is well sampled.

To achieve the best sampling of the scene Sc possible, each two adjacent dots from the adjacent columns in the matrix M are shifted relative to each other in the direction of the coordinate axis y by a third distance of cp. The value cp of said third distance is calculated according to an algorithm solving a problem of covering radius on a lattice as a function of the value ap of the first distance and the value bp of the second distance.

A disclosed device DID for depth imaging in a known way applies a device for projecting a dot matrix on a scene Sc, to which purpose a laser, whose light is spread by a diffraction element in several light beams, or a projector P may be used (Fig. 1).

In the continuation, features of the device DID of the invention for depth imaging are disclosed.

The projector P and a camera C are arranged side by side. A camera optical center CC as well as a projector optical center PC are distant from each other by a fourth distance of d located on a coordinate axis y; they are located on an axis da of the device DID.

An optical axis oap of the projector P and an optical axis oac of the camera C are aligned along a coordinate axis z.

Dots Di of a matrix M are distant from each other by a first distance of ap arranged in columns j oriented along the coordinate axis y. Said columns j are distant from each other by a second distance of bp in a direction of a coordinate axis x.

If the device DID for depth imaging is foreseen for imaging scenes Sc between a lower limiting distance of Z- of the scene from the camera optical center CC or the projector optical center PC and an upper limiting distance of Z+ of the scene from the camera optical center CC or the projector optical center PC a lower limit of the value ap of the first distance of dots Di in the matrix M is determined as

$$ap = fP (d/Z- - d/Z+). \qquad (2)$$

A value fP is a projector focal length.

Under these conditions, a distance between an image $Ii^{Z-}$ of an illuminated ith scene dot, which a projected light beam i forms on the scene Sc at said lower limiting distance of Z-, and an image $Ii^{Z+}$ of an illuminated ith scene dot, which the projected light beam i forms on the scene Sc at said upper limiting distance of Z+, in the sensor S, which is distant from the camera optical center CC (Fig. 3) by a camera focal length of fC, is determined as

$$ac = fC (d/Z- - d/Z+). \qquad (3)$$

Taking into account the condition (2), also a distance between images $Ii^{Z-}$ and $Ii+1^{Z-}$ of illuminated scene dots formed on the scene Sc at a depth of Z- by the light beam i and a light beam i+1, respectively, may be obtained. But a value of this distance should never be below the value ac as determined according to the expression (3) since otherwise the image $Ii^{Z}$ would fall outside the allowed interval (Fig. 4). It must be clear for each image in the sensor S, by which projector light beam it has been formed, especially because it is desired that as many light beams are projected as possible.

The value bp of the second distance in the matrix M is determined in a way that, in the camera sensor S, a distance between images of two adjacent scene dots originating from two adjacent dots from adjacent columns of the matrix M, will be at least one pixel. The value bp of the second distance is also determined with respect to said focal lengths fP and fC, non-linearity of a projector objective and a camera objective, linkage rigidity of optical components, sensor noise, projector luminous flux, ambient light noise and other influences.

An embodiment of the device DID of the invention for depth imaging is represented in the continuation: the device is foreseen for imaging between 2 meters as the lower limiting value Z- for the distance of the scene and 10 meters as the upper limiting value Z+ for the distance of the scene; the focal lengths of the projector objective and the camera objective are 50 millimetres; the sensor resolving power is 100 pixels pro millimetre; a distance between the projector and the camera optical center is 100 millimetres; the projector value ap and the camera value ac according to the expressions (2) and (3), respectively, are 2 millimetres; the value bp of the second projector distance is 0.02 millimetres when assuming that the distance between the columns of dot images in the sensor is 2 pixels.

In the matrix M each two adjacent dots from the adjacent columns are displaced to each other in the direction of the coordinate axis y by a third distance of cp. The most common sampling of the scene Sc is accomplished by calculating the value cp of the third distance according to an algorithm solving a problem of covering radius on a lattice as a function of the first distance value ap and the second distance value bp. For the above embodiment the value cp of the third distance is 0.208 millimetres.

**Claims**

1. A method for depth imaging,
   which applies a matrix (M) of dots (Di) being projected onto a scene with a laser, whose light is spread by a diffraction element, or a projector (P), **characterized in**
   **that** the projector (P) transilluminates the matrix (M) of the dots (Di) in a direction of a third coordinate axis (z) towards the scene,
   which dots (Di) are distant from each other by a first distance of (ap) arranged in columns (j) oriented along a second coordinate axis (y)
   said columns (j) being distant from each other by a second distance of (bp) in a direction of a first coordinate axis (x),
   whereat a lower limit of the value (ap) of said first distance is determined as ap = fP (d/Z- - d/Z+) in terms of
   a preset lower limiting distance of (Z-) of the scene from a camera optical center (CC) or a projector optical center (PC) and
a preset upper limiting distance of (Z+) of the scene from the camera optical center (CC) or the projector optical center (PC)
said camera optical center (CC) and said projector optical center (PC) being located on the second coordinate axis (y) and
an optical axis (oac) of the camera (C) as well as an optical axis (oap) of the projector (P) being distant from each other by a fourth distance of (d) aligned along the third coordinate axis (z),
whereat (fP) is a projector focal length,
and **that** in a sensor (S) of the camera (C) a displacement ($\Delta$i) of an image (Ii$^Z$) of an ith scene dot,
which originates from projecting the matrix dot (Di) and
has a distance of (Z) from the camera optical center (CC) or the projector optical center (PC),
is measured from an anticipated location of an image (Ii$^{Z-}$) of an ith dot in a plane at the lower limiting distance of (Z-) from the camera optical center (CC) or the projector optical center (PC),
which ith dot in said plane would originate from said matrix dot (Di), and
said distance of (Z) of the ith scene dot from the camera optical center (CC) or the projector optical center (PC) is calculated.

2. The method as recited in claim 1, **characterized in that** in the paraxial approximation said distance of (Z) of the ith scene dot from the camera optical center (CC) or the projector optical center (PC) is calculated as

$$Z = (1/Z\text{-} - \Delta i/fC.d)^{-1}$$

whereat the sensor (S) is distant from the camera optical center (CC) by a camera focal length of (fC).

3. The method as recited in claim 2, **characterized in that** the distance of (Z) of any scene point from the camera optical center (CC) or the projector optical center (PC) is calculated by means of interpolation with respect to said distances of adjacent scene dots, for which adjacent scene dots said distances have been calculated in said paraxial approximation.

4. The method as recited in claim 3, **characterized in that** in the matrix (M) each two adjacent dots from the adjacent columns are displaced to each other in the direction of the second coordinate axis (y) by a third distance of (cp)
   and **that** the value (cp) of said third distance is calculated according to an algorithm solving a problem of covering radius on a lattice as a function of the first distance value of (ap) and the second distance value of (bp).

5. A device (DID) for depth imaging,
which device applies projecting a matrix (M) of dots (Di) on a scene and comprises a camera (C) and a projector (P) or a laser, whose light is spread by a diffraction element,
**characterized in**
**that** an optical axis (oap) of the projector (P) and an optical axis (oac) of the camera (C) are aligned along a third coordinate axis (z) and
a camera optical center (CC) and a projector optical center (PC) are distant from each other by a fourth distance of (d) located on a second coordinate axis (y) in a way that the projector (P) and the camera (C) are arranged side by side,
**that** the dots (Di) of the matrix (M) are distantly from each other by a first distance of (ap) arranged in columns (j) oriented along the second coordinate axis (y) and said columns (j) are distant from each other by a second distance of (bp) in a direction of a first coordinate axis (x),
**that** a lower limit of the value (ap) of said first distance is determined as ap = fP (d/Z- - d/Z+) in terms of
a preset lower limiting distance of (Z-) of the scene from the camera optical center (CC) or the projector optical center (PC) and
a preset upper limiting distance of (Z+) of the scene from the camera optical center (CC) or the projector optical center (PC)
whereat (fP) is a projector focal length,
**and that** the value (bp) of said second distance is determined in a way that in a camera sensor (S) a distance between images of two adjacent scene dots, which originate from two adjacent matrix dots from adjacent matrix columns, will be at least one pixel.

6. The device as recited in claim 5, **characterized in**
**that** in the matrix (M) each two adjacent dots from the adjacent columns are displaced to each other in a direction of the second coordinate axis (y) by a third distance of (cp),
which value (cp) of said third distance is calculated according to an algorithm solving a problem of covering radius on a lattice as a function of the value of (ap) of the first distance and the value of (bp) of the second distance.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007043036 A1
- US 8150142 B2
- US 6751344 B1